# EUROPEAN PATENT APPLICATION

(11) **EP 1 037 411 A2**
(43) Date of publication of application: **20.09.2000**
(21) Application number: 00302035.1
(22) Date of filing: 14.03.2000
(51) Int. Cl.: H04B 10/12

(54) **Gain equalization for optical fiber distribution network**

(30) Priority: 17.03.1999 US 270621
(71) Applicant: Transcept, Inc., Manchester, NH 03103 (US)
(72) Inventor: DeVinney, Erik T., Goffstown, New Hampshire 03045 (US); Sabat, John Jr., Merrimack, New Hampshire 03054 (US)
(74) Representative: Harvey, David Gareth

(57) **Abstract**

Circuitry in central (BTS) and remote transceivers (CMI) is disclosed to monitor wireless telephone signal levels and control the settings of gain control circuitry in a plurality of remote transceivers (CMI) that carry telephony signals between wireless telephones and the central transceiver (BTS) via an optical distribution network (18). The central transceiver receives the remote wireless telephony signals from all transceivers within a given range of signal amplitude.

## Description

### FIELD OF THE INVENTION

The present invention relates to wireless communication networks and more particularly to gain control circuitry for a broadband optical fiber distribution network that carries signals from remote subscriber units to provide telephone network access.

### BACKGROUND OF THE INVENTION

Wireless communication networks, such as cellular mobile telephone and personal communications services (PCS), continue to enjoy wide spread growth and popularity. There is often times a need in such systems to provide increasingly greater call handling capacity, as well as to accommodate higher peak usage. Emerging PCS networks, presently still in the stages of being implemented, demand additional design considerations such as low build out cost as they must compete with entrenched cellular networks.

In cellular mobile telephone, Personal Communication Services (PCS) or other wireless communication system, remote transceivers are each located within a defined area, or cell. The transceivers establish wireless communication links with the wireless telephones that are operating within that cell. To increase the number of wireless telephone subscribers that can use the wireless telephone system it becomes necessary to decrease the operational range of each cell or sector, and increase the number of cells or sectors required to provide service to a given area. Having cells or sectors of decreased size permits greater reuse of the limited number of frequency channels allocated for wireless telephone service because other cells or sectors located at a closer range can reuse the same frequency channels for additional calls without signal interference. However, the advantage of increasing the call carrying capacity in this manner is offset by the requirement for additional remote transceivers for the additional cells.

This tradeoff can be minimized by utilizing some type of broadband distribution network such as an existing cable television network to provide a communications path between remote transceivers in each of the cells or sectors and centrally located base transceiver station. In this arrangement, the base transceiver station acts as the interface between the telephone network and the wireless telephone system, and the remote transceiver acts as the wireless telephone system interface with the broadband distribution network.

To carry wireless telephony signals over a broadband distribution network as described above, a predetermined bandwidth is typically allocated on the network. To most efficiently use a given bandwidth, precisely controlled radio frequency carrier translation circuits are utilized in both the base station and remote transceiver equipment. Within the base station equipment, this function is provided by a central base station transceiver, also called a Hub Interface Converter (HIC). This unit functions to translate the telephony signals in the wide frequency spectrum of radio frequency signals on the telephone network.

The system also requires a number of remote transceivers, also called cable microcell integrators (CMIs) or Remote Antenna Drivers (RADs), in each of the cells or sectors that can carry many channels of telephony signals between the wireless telephones and the central transceiver via the broadband distribution network, without creating signal interference with the telephony signals in adjacent cells or sectors. In addition, the CMIs must function with and translate telephony signals in the wide frequency spectrums of up to 1000 MHz on the broadband distribution network and between 1850-1990 MHz for the radio link between the remote transceivers and wireless telephones.

The remote transceivers (CMIs) and the broadband distribution network are exposed to numerous adverse conditions, such as temperature extremes, which unpredictably change the output power levels produced by their transceivers, and affect losses and gains along the broadband distribution network. The power levels output from the remote transceivers must be constantly monitored and adjusted to compensate for these adverse conditions. In addition, such remote transceivers need to compensate not only for network variations between each remote transceiver and the central transceiver, but also for the temporal variations in the various distribution network links.

The introduction of an optical fiber distribution network between the remotely located transceivers (CMIs) and the centrally located network interface equipment (HICs) exacerbates this problem. In particular, the optical fiber network introduces different optical alterations to different optical signal paths, resulting in further adverse affects on the ability to control the signals received.

It is critical to provide power control precisely for the reverse link signalling direction, especially for Code Division Multiple Access (CDMA) type cellular telephone networks. In particular, each of the subscriber units in such a system generally shares access to a given radio carrier frequency with other subscriber units. The system separates the signals arriving at the base station site by correlating each received signal with a precisely timed digital signal such as a Walsh coded or pseudo noise coded signal. The correlation properties of such codes are such that only a selected one of the originating signals will result. If the signals originating from the different subscriber units do not arrive at the base station with approximately the same received power level, the stronger received signal will generate excessive interface for the weaker ones. In the worst case, it becomes impossible to demodulate the weaker CDMA signals on the reverse link. Precise power control is required to equalize the received signal levels.

### SUMMARY OF THE INVENTION

Accordingly, it is an object of the present invention to provide a simple and low cost system for coupling wireless communication signals between centrally located base station equipment and remote cell sites.

It is a further object of this invention to provide such a system with adequate control over signal power levels to enable optimum control of the resulting transmission signal power levels of the remote antennas.

It is a still further object of the present invention to eliminate some of the complexities involved with deploying such systems in the past, such as by reducing the need to mix the various types of physical communication media used to implement such a network.

Yet a further object of the present invention is to provide such a system which may distribute digitally encoded signals, such as Code Division Multiple Access (CDMA) signals, efficiently.

Briefly, the present invention makes use of a broadband distribution network consisting of optical fiber transmission media to distribute signals between centrally located base transceiver station (BTS) equipment and remotely located transceiver equipment referred to herein as "cable microcell integrators" (CMI). With this scenario, a single optical carrier at a given optical wavelength preferably carries the channelized radio frequency signals for a number of different cells or sectors thereof. The CMIs are deployed in a configuration such as one per cell and/or sectors thereof, to provide radio frequency coverage in a pattern which approximates the eventual expected required deployment of base stations when the system is at full capacity. The same active traffic channels may then be broadcast to multiple CMIs and hence to multiple coverage areas.

Common system elements include a fiber node, which in the forward direction collects the signals radiated by one or more base stations and converts them to suitable format for transmission over the optical fiber such as at a 1550 nanometer (nm) wavelength optical carrier. At the remote sites, an optical fiber "drop" or splitter in turn feeds a fiber optic input to each cable microcell integrator (CMI).

The CMIs each contain a radio transceiver to convert the information at the optical wavelength to an appropriate radio frequency signal with appropriate forward radiation frequencies. For example, in the PCS bands in the United States, the forward radiated signals may occupy a 1.25 MHz bandwidth at a carrier frequency in the range of 1930-1990 MHz.

Operation in the reverse direction is analogous. The transceivers in each CMI receive radio frequency communication signals such as in the PCS band from 1850-1910 MHz and convert such signals to an appropriate optical signal at an appropriate reverse link carrier wavelength such as 1310 nm. The single fiber distribution network then carries the reverse link signal to the fiber node. The fiber node in turn reconverts the optical signals to the appropriate radio frequency signals at the expected PCS reverse link frequencies such as in the band from 1850-1930 MHz.

In addition, the optical path losses and gains are equalized so that a signal traveling from one CMI in a reverse direction back to the HIC will experience a similar path loss as for other signals traveling on the reverse path from other CMIs. Optical couplers or splitter/attenuators are chosen to import an initial course correction in their insertion loss. For example, an optical coupler associated with a relatively far away CMI might be chosen with an 8dB insertion loss; the coupler for the closer-in CMI might be chosen with a 20dB insertion loss.

Each CMI transceiver preferably also has gain control circuitry by which the gain of the remote transceivers can be more precisely adjusted by the central base station transceiver which is monitoring the power level of a gain tone signal received from each CMI transceiver. This is done so that the signal level of telephony signals originating at the wireless telephones and appearing at the input of the central transceiver are at a consistent level that is within a relatively narrow range.

### BRIEF DESCRIPTION OF THE DRAWINGS

The foregoing and other objects, features and advantages of the invention will be apparent from the following more particular description of preferred embodiments of the invention, as illustrated in the accompanying drawings in which like reference characters refer to the same parts throughout the different views. The drawings are not necessarily to scale, emphasis instead being placed upon illustrating the principles of the invention.

Fig. 1 is a block diagram of a wireless system making use of a broadband distribution network implemented with an optical fiber according to the invention.

Fig. 2 is a circuit diagram of the distribution network showing how multiple CMIs are arranged to connect to the optical fiber.

Fig. 3 is a more detailed block diagram of the forward link portion of a fiber node deployed at the central base station location or "head end" of the system.

Fig. 4 is a more detailed block diagram of a reverse link direction portion of the fiber node.

Fig. 5 is a more detailed block diagram of a Cable Microcell Integrator (CMI) deployed at an individual cell or sector location.

Fig. 6 is a circuit diagram for a reverse direction down converter in the CMI.

Fig. 7 is a circuit diagram for the reverse gain control processing within the head end.

### DETAILED DESCRIPTION OF THE INVENTION

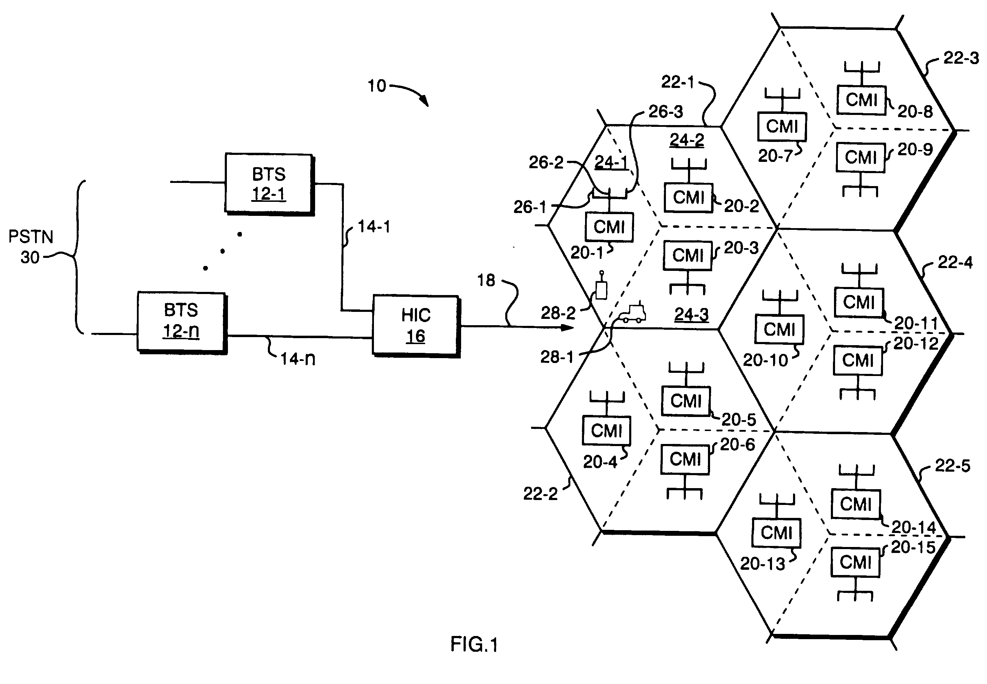

Turning attention now to the drawings more particularly, Fig. 1 is a block diagram of the components of a wireless communication system such as a Personal Communication System (PCS), or other cellular mobile telephone system, in which a fiber optic distribution media 18 is used to distribute channelized radio frequency signals upbanded onto one or more optical carriers as one or more simulcast groups.

The system 10 includes one or more conventional base transceiver stations (BTSs) 12-1,..., 12-n, a Hub Interface Converter (HIC) 16, and a number of Cable Microcell Integrators (CMIs) 20-1, 20-2, ..., 20-c. In the illustrated embodiment, an exemplary cell 22-1 is divided into three 120 degree sectors 24-1, 24-2, 24-3, and there is a corresponding CMI 20-1, 20-2, 20-3 deployed for each sector. In this instance, each CMI 20-1 has associated with it typically three sectorized antennas 26-1, 26-2, 26-3. In this arrangement, three antennas 26-1, 26-2, 26-3 are typically employed in each of the sectors 24. The first antenna 26-1 is used as a transmitter antenna. The second antenna 26-2 is used as a primary reception antenna, and a third antenna 26-3 is used as a secondary reception or diversity reception antenna.

Alternatively, in a microcellular type configuration, the cell 22-1 is divided into three microcells 24-1, 24-2, 24-3, in which case the antennas 26-1, 26-2, 26-3 are omnidirectional antennas located approximately in the center of each microcell 24. It should therefore be understood that when a "sector" is referred to in the following discussion, the same can be said for a microcell in the alternate embodiment.

The BTSs 12-1 ... 12-b are each coupled to the HIC 16 using appropriate radio frequency (RF) transmission media, such as coaxial cables 14-1, 14-n. The HIC 16 is physically located at the same centralized location as the BTSs 12. However, the HIC 16 is coupled to each of the remotely located CMIs 20-1, 20-2, ..., 20-c using an optical fiber 18. The manner of interconnecting the CMIs and their particular manner of allocating frequency channels between the BTS 12-1 and CMIs 20 is the particular subject of the present invention.

Although optical fiber 18 is shown as a single line, it should be understood herein that the fiber 18 may actually be a network of fibers 18, repeaters and the like to provide coupling of optical signals between the various illustrated components.

The system 10 provides voice and/or data traffic signals between subscriber units, such as a mobile subscriber unit 28-1 located in a vehicle, and hand-held subscriber units such as 28-2. Specifically, the system 10 provides traffic signals between subscriber units 28 and a network, such as the public switched telephone network (PSTN) 30. In the particular preferred embodiment of the invention being described herein, the signaling protocol (also known as the "air interface") between the base transceiver stations (BTS) 12 and the subscriber units 28 may, for example, be the Code Division Multiple Access (CDMA) IS 95-B standard promulgated by the Telecommunications Industry Association (TIA) in the United States.

The CMIs 20 in the illustrated embodiment are each associated with a sector or microcell 24. For example, an exemplary CMI 20-1 is associated with a 120 degree sector 24-1 of a cell 22-1. CMI 20-1 is thus responsible for receiving radio signals from the subscriber unit 28-2 located within the sector 24-1 and forwarding them to one of the associated BTSs 12. Likewise, radio signals originating at one of the BTSs 12 and intended for subscriber unit 28-2 are forwarded through coaxial cable 14, HIC 16, over the optic fiber 18, to respective CMI 20-1.

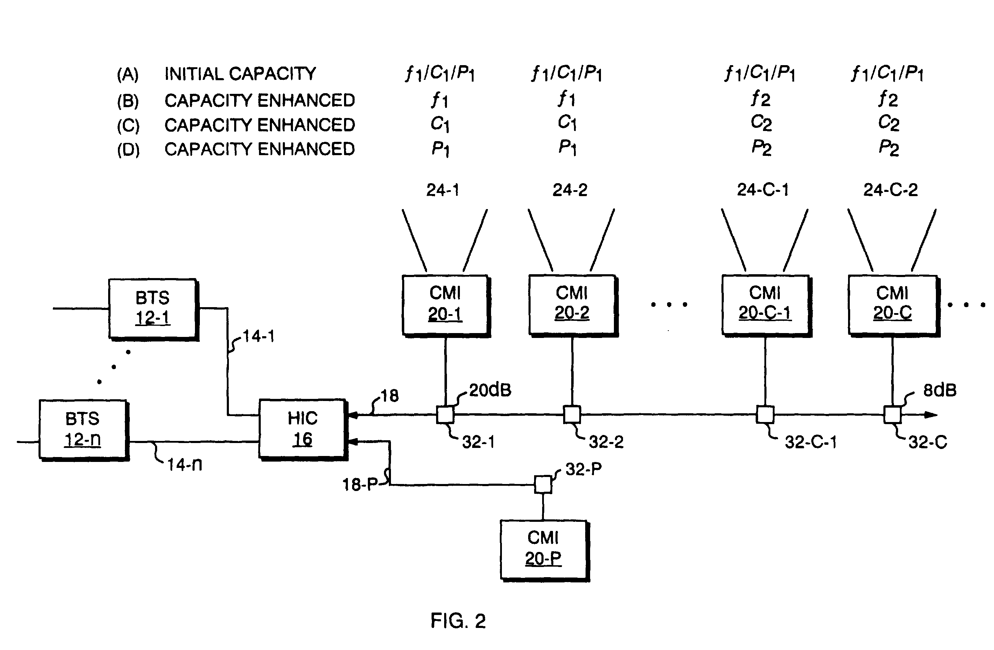

Turning attention now to Fig. 2, the arrangement of the optical media 18 and its interconnection between the HIC 16 and various CMIs 20 will be discussed. In particular, each of the CMIs 20-1 is fed from an optical fiber 18 via a corresponding optical splitter 32-1, 32-2, ..., 32-c-1, 32-c. In this manner, the single fiber 18 is used to distribute a number of RF signals which may be modulated onto a single optical carrier wavelength to a plurality of the CMIs 20-1, 20-2, ..., 20-c.

In a forward link direction, a mode is supported wherein the same radio frequency signal is to be radiated within multiple sectors 24-1, 24-2, ..., 24-s of a particular simulcast group. This mode eliminates the need for coaxial cables, repeaters, and other radio frequency equipment that might otherwise be necessary to be deployed between various CMIs 20-1, 20-2, ..., 20-s in the sectors 24-1, 24-2, ..., 24-s. For the reverse link, the various optical couplers 32-1, 32-2, ..., 32-c efficiently sum the optically modulated carriers emanating from each corresponding CMI 20-1, 20-2, ..., 20-c. With this arrangement, a single centrally located BTS 12-1 may service a number of CMIs 20, therefore reducing initial build out cost.

The optical splitters 32-1, 32-2, ..., 32-c are chosen to import a specific optical insertion loss. The insertion loss for a particular splitter 32-n depends upon the optical fiber cable length between its associated CMI 20-n and the hub interface converter (HIC) 16. For example, the splitter 32-c which is associated with the farthest away CMI 20-c may introduce an 8dB insertion loss to reverse link signals originating from CMI 20-c. On the other hand, the splitter 32-1 (and associated attenuators as needed) which is associated with a close-in CMI 20-1 introduces a higher peak loss, such as 20dB. By so configuring the splitters 32, a rough equalization of the reverse link signal path loss experienced by different CMIs 20 is accomplished.

It should also be understood that other optical fibers 18-p may be fed to the HIC 16. In this case, the insertion loss of splitter 32-p is selected to equalize the reverse optical path loss of signals originating from another CMI 20-p with the signal path loss experienced on optical fiber 18.

Furthermore, as can now be better understood, a bank of centrally located BTSs 12-1, 12-2, ..., 12-n may use the common optic fiber 18 to distribute signals to a number of CMIs 20. Even at full capacity, there is a benefit to centrally locating the BTSs 12 in order to facilitate access for maintenance and logistics. In addition, in areas of hilly terrain and/or large numbers of tall buildings, link propagation distance may be naturally limited. Therefore, multiple CMIs 20 may be deployed in a configuration which optimizes radio frequency coverage while at the same time minimizing the need to deploy multiple BTSs 12.

As shown in the table at the top of Fig. 2, for a low capacity or initial system build out stage (A), the radio frequency carrier fl may be identical for each CMI 20-1, 20-2, ..., 20-c. In a later capacity enhanced configuration (B), the sectors 24-1 and 24-2 may still constitute a simulcast group in which they are radiating with the carrier frequency fl. However, other sectors such as 24-c-1 and 24-c-2 may be assigned a different PN code phrase offset to form a second simulcast group. The two simulcast groups may still be carried on a single optical carrier. Thus, by reassigning earners with different PN code phase offsets the traffic handling capacity of the system 10 is increased without the need to re-engineer the system for RF propagation, or to deploy additional antennas or radio transceiving equipment.

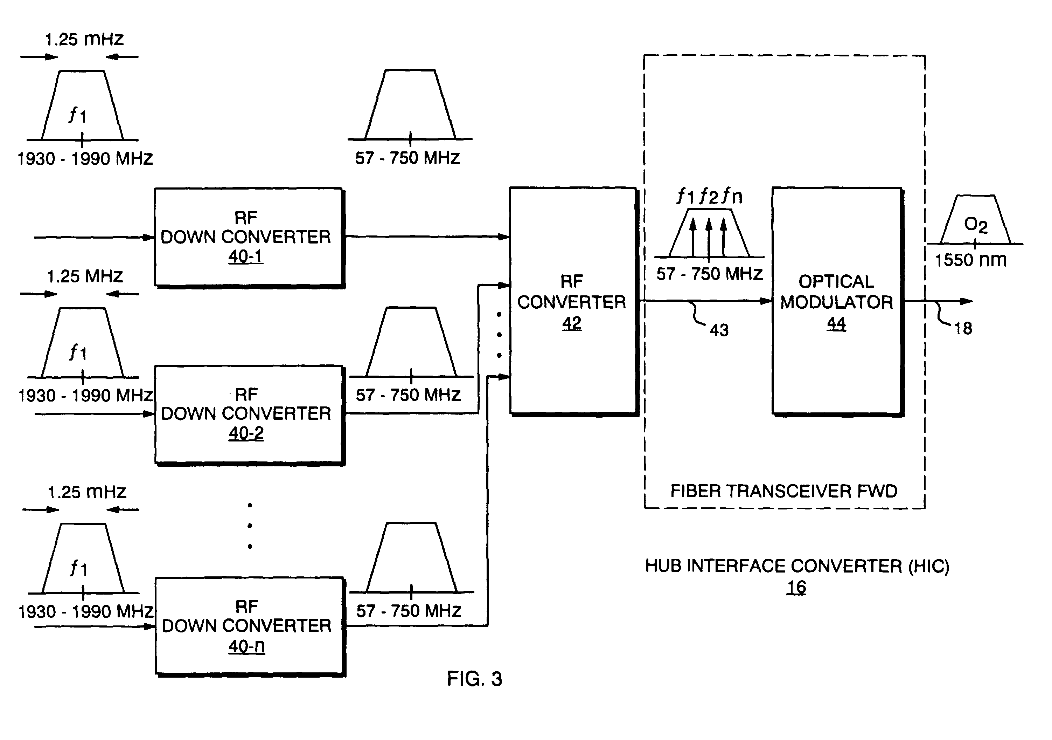

The Hub Interface Converter (HIC) 16 is shown in more detail in Fig. 3. In this particular view, the portion of the HIC 16 associated with implementing the forward direction, namely the direction of transmission of signals from the BTSs 12 out to the CMIs 20, is illustrated. That portion of the HIC 16 is seen to include a number of RF down converters 40-1, 40-2, ..., 40-n that couple to an RF combiner 42 which in turn feeds an optical modulator 44. The optical modulator 44 provides the forward link direction component of a fiber optic transceiver 45.

An exemplary RF down converter 40-1 receives the RF signals generated by an associated BTS 12-1 and translates their carrier frequency to a carrier frequency in a range more typical of cable distribution networks. In the illustrated embodiment, the RF down converter 40-1 accepts a 1.25 MHz bandwidth signal, which according to the CDMA wireless interface standard in the forward direction may exist at an RF carrier in a range from 1930-1990 MHz, and converts the RF energy to a lower intermediate frequency (IF) in the range of from, for example, 57-750 MHz. In the illustrated embodiment, the BTS 12-1 has provided signals at a carrier frequency f1 in the range indicated and a second base station 12-2 has provided a signal of 1.25 MHz at a different carrier frequency f2 but still within the forward link range of 1930-1990 MHz typical of the PCS band.

There is typically a single RF down converter 40 associated with each BTS 12; however, it should be understood that various other scenarios are possible. For example, the function of the RF combiner 42 may be provided prior to the down conversion process implemented by the elements 40.

The RF combiner 42 accepts the down converted RF signals produced by the down converters 40-1 ... 40-2 ... 40-n to produce a single combined RF signal 43. The combined RF signal still contains signal components within the range of 57-750 MHz, containing the carrier frequencies f1, f2, ..., fn. It should be understood in accordance with the above discussion that a given RF signal of 1.25 MHz on a given carrier frequency f1 may actually contain multiple traffic channels implemented with different codes c1, c2, ..., c_{Q} or even code phases p1, p2, ..., pz. The combined RF signal 43 is then provided to the optical modulator 44 and upbanded to an optical frequency such as at a carrier wavelength of 1550 nanometers (nm) appropriate for transmission over the optic fiber 18.

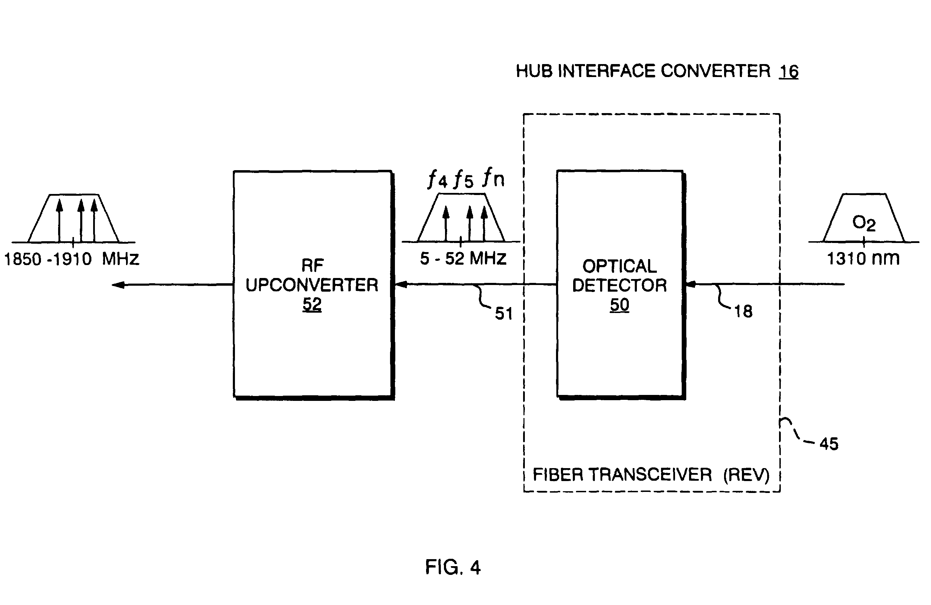

Fig. 4 shows the reverse direction portions of a HIC 16 in more detail. In particular, an optical detector 50 accepts signals from the fiber 18 as received from multiple CMIs 208 in the various sectors 24. Such signals may, for example, be optically modulated onto a single optical carrier within a wavelength range of 1310 nanometers. The optical detector 50 then provides a conversion of the energy in the optical band down to a convenient intermediate frequency (IF) band such as in the range from 5-52 MHz. The optical detector 50 serves as the receiver or reverse link portion of the optical transceiver 45. The combined RF signal 51 produced by the optical detector 50 may therefore contain information at a number of carrier frequencies f4, f5, ..., fm.

The RF upconverter 52 in turn translates such signals to a band within the PCS band used for reverse wireless transmission such as from 1850-1910 MHz as suitable for coupling to the standardized base transceiver system 12.

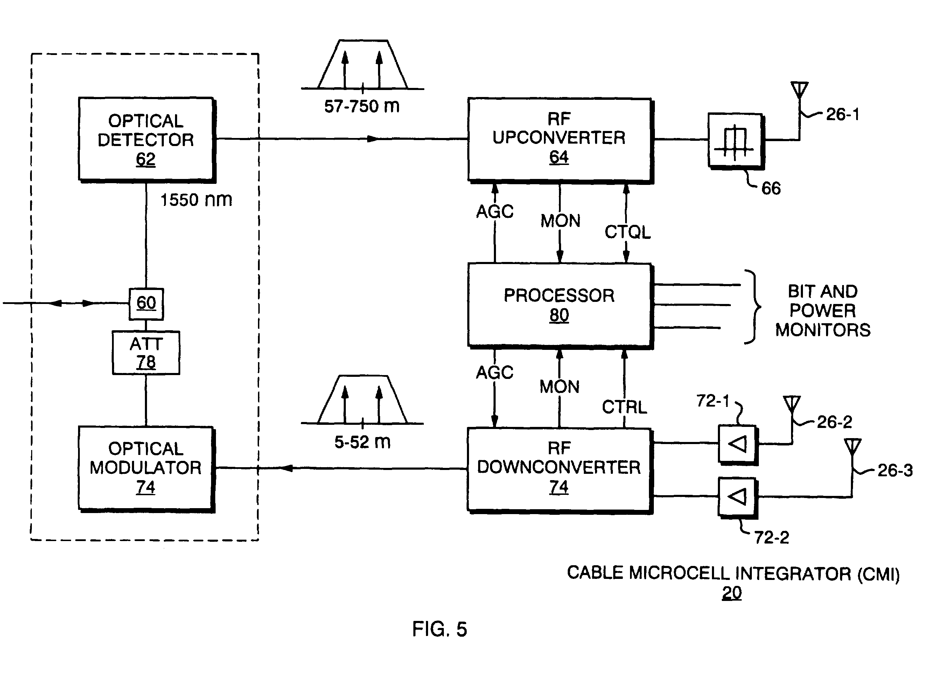

Turning attention to Fig. 5, the details of the CMI 20 will now be addressed. The 1550 nm signal received from the optic fiber 18 is first fed to a splitter 60 to allow a portion of the optical energy to be fed to an optical detector 62. The optical detector 62 in the preferred embodiment accepts optical signals in a range of, for example, 1550 nanometers providing a detected signal spanning the forward link band at the 57-750 MHz IF carrier. This signal, which may contain the multiple RF carriers f1, f2, ..., fn, codes or code phases as previously described, is then fed to the RF upconverter 64.

The output of the RF upconverter 64 is the radio frequency signal in the expected forward link range of from 1930-1990 MHz. A filter 66 may further restrict the transmission bandwidth to the single channel frequency bandwidth of approximately 1.25 MHz. The signal is then transmitted over the air by the transmit antenna 26-1.

In the receive, or reverse link direction, signals received on the primary and secondary reception antennas 26-2 and 26-3 are first fed to a low noise amplifiers 72-1 and 72-2. Such signals of interest are in the range of 1850-1910 MHz which are the frequency band typically associated with reverse links in the PCS region. The amplifiers produce a band limited signal of 1.25 MHz that may have multiple carriers, codes and/or phases as previously described.

The RF down converter 76 shifts such signals to the IF band from 5-52 MHz. The RF down converter 76 shifts the primary received signal from amplifier 22-1 to a different IF carrier than the secondary or diversity received signal from amplifier 72-2. This provides a system 10 with the ability to feed back a diversity antenna signal so that they can be properly processed by the receive side of the BTSs 12. As will be understood, the RF combiner in turn accepts both of the down converted signals and feeds them to an optical modulator 74 which upbands the information of interest to an optical carrier such as in the range of 1310 nanometers. The optical signal is then fed to the combiner 60 and back to the fiber 18.

An optical attenuator 78 is inserted with the splitter 60 to control the optical insertion loss of the reverse link signals applied by the CMI 20 to the fiber 18.

The upconverter 64 and down converter 74 are connected to and controlled by a microprocessor 80. Frequency multiplexed with the telephony signals carried between HIC 16 and each of CMIs 20 are signals for controlling gain control circuitry in each of remote CMIs 20 in accordance with the teaching of the present invention. The gain control circuitry in upconverter 64 is controlled by HIC 16 to adjust its output signal level so that the power level of telephony signals input to HIC 16 is within a relatively narrow range acceptable to HIC 16. This is repeated for all remotely located CMIs 20 distributed along and connected to the broadband optical fiber distribution network 18.

Microprocessor 80 also sends a control signal via lead AGC to upconverter 64 which causes the output of an oscillator (gain tone signal), with known signal level, to be combined with any telephony signals and transmitted to HIC 16 via the optical cable 18.

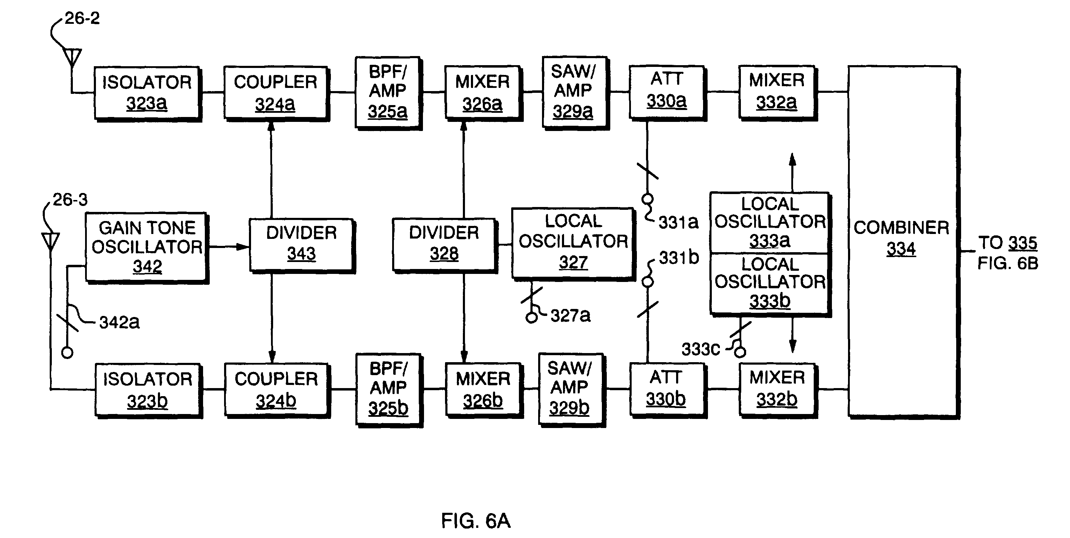

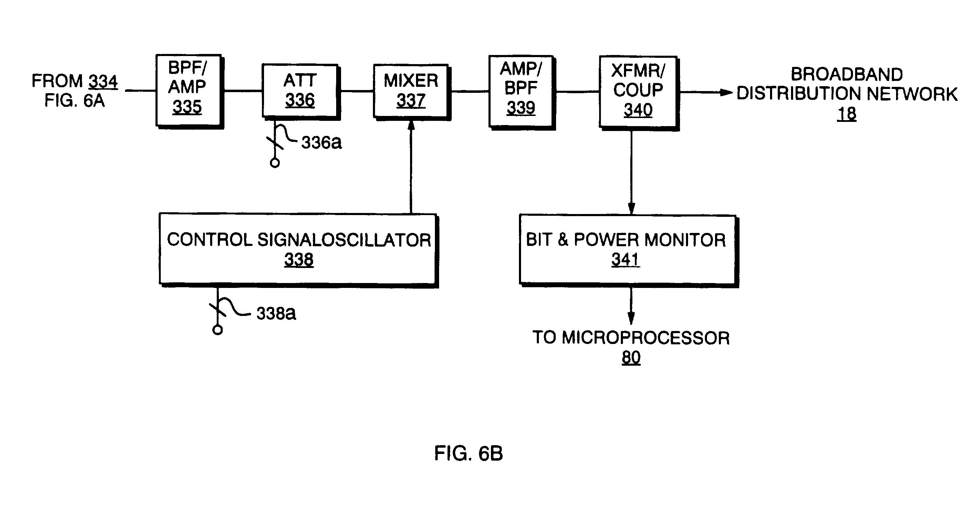

The gain tone signal level is of a low amplitude that does not interfere with the telephony signals with which it is mixed, but is separated from the telephony signals at HIC 16. HIC 16 analyzes the amplitude of the received gain tone signal, which will reflect gains and losses in CMI 20 and broadband distribution network 18, as part of a determination whether or not to change an RF attenuator (Fig. 6), 330b and 336 settings in CMI 20. This operation is repeated for each remotely located CMI 20 so that the power level of telephony signals input to HIC 16 is within a relatively narrow range acceptable to HIC 16.

After processing the gain tone signal received along with telephony signals from each of the CMIs 20 to determine if the signal levels are too low or too high, HIC 16 sends a gain control command back to each CMI 20 in which the signal level has to be adjusted. This control command is received by microprocessor 80 on leads CTRL from upconverter 64. Microprocessor 80 responds to the gain control command received from HIC 16 to send an AGC adjustment signal via leads AGC to circuits 64 and 74. In circuit 74, the AGC adjustment signal results in changes being made to attenuators as described below in greater detail with reference to Fig. 6, to adjust the signal level of the telephony signals that are received by HIC 16. This adjustment accounts for losses and gains not only in CMI 20, but also in broadband distribution network 18. In this manner the power level of signals received by HIC 16 from all CMIs 20 are within a relatively narrow range acceptable to HIC 16.

CMI 20 may also receive an interrogation control signal at any time from HIC 16 which causes microprocessor 80 to send information about CMI 20 back to HIC 16. This information includes the settings of attenuator pads 330a, 330b and 336, the temperature at which each CMI 20 is operating, and other information. This information is used by HIC 16 in making decisions regarding controlling the signal level of each CMI 20.

Fig. 6 is a more detailed view of the reverse link portion of the CMI 20, including the amplifiers 72-1, 72-2 and RF down converter 74. Briefly, primary receive antenna 26-2 is connected to a first portion of the circuitry, and that circuitry is identical to a second portion of the circuitry that is connected to diversity receive antenna 26-3. The telephony signals received by both antennas from a wireless telephone (not shown) are initially processed in parallel, then the two signals are frequency multiplexed together and are both returned via broadband distribution network 18 to remote HIC 16.

Wireless telephony signals are received by the primary receive antenna 26-2. These signals are input to an isolator 323a which isolates antenna 321 from circuit 309. The received signal is then input to directional coupler 324a that has a second signal input thereto from power divider 343 which is the aforementioned low level, gain tone signal that is used for gain control purposes in accordance with the present invention.

A gain tone oscillator 342 is controlled at its input 342a by microprocessor 80 which is responsive to control signals from HIC 16. The analog gain tone signal output from gain tone oscillator 342 is at a known amplitude and is mixed with the telephony signal which is a digital, spread spectrum format that is well known in the art. It is this gain tone signal that is detected at HIC 16, processed and used to make a decision to change the settings of attenuators 330a, 330b and 336.

The telephony signal received from remote wireless telephone and the low level gain tone signal are applied via directional coupler 324a to a combined band pass filter and amplifier 325a (corresponding to amplifier 72-1 in Fig. 5).

The amplified and filtered telephony and gain tone signals are then input to mixer 326a which is the first of two heterodyning stages used to convert the carrier frequency of the telephony signal to the selected carrier frequency for transmission over broadband distribution network 112 to HIC 16, shown in Fig. 1. Mixer 326a also has input thereto a signal from local oscillator 327. The first heterodyning signal from local oscillator 327 is input to power divider 328 which applies to signal from local oscillator 327 to both mixers 326a and 326b while providing isolation between these two mixers.

The operation of mixer 326a results in multiple frequencies being output from the mixer as is known in the art. All these signals are input to narrow pass band SAW filter and amplifier 329a which selects only the desired frequency carrier modulated by the gain tone and telephony signals created by mixer 326a, and amplifies same.

The frequency shifted carrier modulated by the telephony signal is then input to an RF step attenuator 330a which is used to adjust the gain level of the signal in one-half dB steps as part of the implementation of the present invention. The amount of attenuation provided by step attenuator 330a is controlled by a binary word at its control input 331a from microprocessor 80. Microprocessor 80 controls the settings of step attenuators 330a, 330b and 336 responsive to the AGC gain control signals received from HIC 16 as previously described. This assures that the power level of all telephony signals received by HIC 16 from all CMIs 20 a-I are within the relatively narrow range acceptable to HIC 16.

The gain tone and telephony signals output from step attenuator 330a are input to mixer 332a along with a fixed frequency signal from local oscillator 333a. Mixer 332a is the second of the aforementioned two heterodyning stages. However, the frequency of local oscillator 333a is different from the frequency of local oscillator 333b. The result is that the carrier frequency of the telephony signal output from mixer 332a is different than the carrier frequency output from mixer 332b.

The telephony signals received by primary antenna 26-2 and diversity antenna 26-3, each now at a different carrier frequency, and the gain tone signal combined therewith, are combined into one composite signal by combiner 334. The combined signals are first filtered by band pass filter and amplifier 335 and then input to step attenuator 336 to give a final adjustment to the signal level of these combined signals. Similar to the operation of the previously described step attenuators, this digitally controlled attenuator 336 is set by microprocessor 80 responsive to a gain control signal received from the HIC 16 as part of the novel gain control operation.

The frequency multiplexed telephony signals output from step attenuator 336 are input to signal combiner 337 which has a second input from control signal oscillator 338. The frequency of control signal oscillator 338 is controlled by a binary signal on control leads 338a from microprocessor 80 to set the frequency of the oscillator. HIC 16 is the origin from which a control signal is received to set the frequency of control signal oscillator 338. The frequency chosen is to fall within the band of frequencies used for the telephony signals received via the primary and the diversity antennas.

Responsive to different control signals received from HIC 16, microprocessor 80 (Fig. 5) sends signals on control inputs 338a. These microprocessor 80 signals cause control signal oscillator 338 to produce an information signal. The information signal indicates various information about CMI 20, but particularly including the settings of step attenuators 330a, 330b and 336, to HIC 16 as part of the novel gain control operation. HIC 16 uses this information to keep an updated status regarding each of the CMIs 21-1, ..., 20-n.

The output from combiner 337 now has multiple telephony and gain tone signals frequency multiplexed to be returned via broadband network 18 to HIC 16. The signals are the telephony signals received by antennas 321 and 322, the gain tone signal used as part of the present invention, and the system information signal output from control signal oscillator 338. This frequency multiplexed signal output from combiner 337 is input to band pass filter and amplifier 339 to amplify the signal and to remove any extraneous signals before the signal is coupled to broadband distribution network 18 and sent to HIC 16 for processing. In addition, per the teaching of the present invention, the signal power level of the telephony signal is such that when it is received at HIC 16 it is within the relatively narrow range acceptable to HIC 16.

Transformer and coupler 340 is used to couple the frequency multiplexed signals described in the last paragraph to optical distribution network 18. The transformer is an impedance matching transformer having 50 ohm primary and 75 ohm secondary windings. When broadband distribution network 18 uses coaxial cable, the secondary winding of transformer 340 is wired in series with the center conductor of the video distribution coaxial cable. As previously described, CMI 20 hangs from the coaxial cabling of the broadband distribution network 112 to which it is connected. In other applications, such as with fiber optic cable, other well known frequency conversion and signal coupling techniques are used.

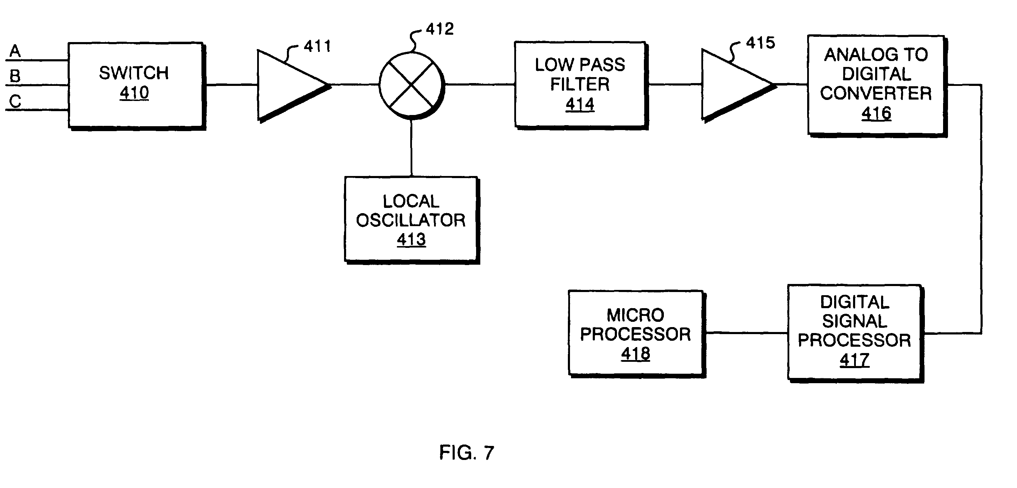

In Fig. 7 is shown a block diagram of the circuitry in HIC 16 that is used to monitor the gain tone mixed with telephony and control signals received by the HIC 16 from all CMIs 20 via optical distribution network 18. There are three inputs shown to RF switch 410, designated A, B and C. Each of these inputs is connected to receive signals from CMIs 20 on one sector of optical distribution network 18. All CMIs 20 on one sector carry telephony signals at a first carrier frequency. Thus, input A will receive telephony signals that have a first carrier frequency, input B will receive telephony signals that have a second carrier frequency, and input C will receive telephony signals that have a third carrier frequency. Thus, with reference to Fig. 1 as an example, CMIs 20 a-c may all be on one sector and their carrier signal is connected to input A of the circuit in Fig. 7, CMIs 20 d-f may all be on a second sector and their carrier signal is connected to input B of the circuit in Fig. 7, and CMIs 20 g-I may all be on a third sector and their carrier signal is connected to input C of the circuit in Fig. 7. In addition, all the CMIs 20 in each sector can simultaneously handle multiple calls, and additional sectors are defined to handle additional traffic. If additional wireless telephony traffic must be handled, and more than three sectors are required, an additional HIC 16 must be provided, and some CMIs 20 must be re-allocated to function with the additional HIC 16.

To provide signals to the A, B and C inputs, receiver circuitry is connected to each of the three inputs that receives telephony and control signals transmitted over optical distribution network 18 from CMIs 20. The receiver circuits are not shown, but each comprises an input filter followed by a signal divider that applies a portion of the received signal to the A, B and C inputs of the HIC 16 circuit shown in Fig. 7.

Switch 410 is an RF switch that is periodically operated by microprocessor 418 to connect individual ones of inputs A, B and C to the remainder of the circuitry in Fig. 7. Thus, the portion of circuitry past switch 410 has input thereto, on an individual basis, the multiplexed telephony signals from all CMIs 20 within a sector to which it is connected at each moment in time. The telephony signal from each CMI 20 has a spread spectrum, digitized telephony signal and the analog gain tone signal. The received composite signal from all CMIs 20 within a sector is first amplified by amplifier 411 and then input to mixer 412 along with the output from local oscillator 413. The standard heterodyning process of mixer 412 also produces a number of spurious signals. The output of mixer 412 is input to low pass filter 414 centered around the gain tone which filters out most of the spread spectrum signal and the spurious signals from the mixing process. This increases the relative level of the gain tone received from each CMI 20 with respect to the remaining energy of the telephony signal. The resultant signal is then amplified at amplifier 415 and input to analog to digital converter 416 to change the remaining signal to a digital signal which is input to digital signal processor 417 for further processing.

The further processing that is performed by digital signal processor 417 in digital form are the same steps that have just been described for the analog circuits in Fig. 7. The digital signal that is input to digital signal processor 417 is digitally heterodyned and low pass filtered to get rid of more, but not all of the remaining telephony signal. The result is that the gain tone signal now has a 30 dB gain with respect to the telephony signal, as compared to the initial power ratios generated by the CMIs 20.

The gain tone signal from the CMIs 20 in a sector is processed by microprocessor 418 and its signal level is compared against a standard signal level. If the amplitude of the gain tone signal is too low, microprocessor 418 causes a gain control signal to be sent back over optical distribution network 18 to the particular CMI 20 that has the too low gain tone. This control signal has an address pre-fixed thereto which causes only the particular CMI 20 to receive the gain tone control signal. Microprocessor 80 (Fig. 5) in the particular CMI 20 responds to the gain tone control signal and causes a signal to be output on lead AGC to circuit 74. The AGC signal is applied to the digital control inputs of step attenuators 330a, 330b and 336 and causes the attenuation they insert into the circuit to be decreased. The effect is to increase the power level of the telephony signals and gain tone from gain tone oscillator 342 that is combined with the telephony signal and received by the circuit in Fig. 4.

If the amplitude of the gain tone is too high microprocessor 418 causes a gain control signal to be sent back over optical distribution network 18 to the particular CMI 20 that has the too high gain tone. This gain control signal has an address pre-fixed thereto which causes only the particular CMI 20 to receive the gain control signal. Microprocessor 80 (Fig. 5) in the particular CMI 20 responds to the gain control signal and causes a signal to be output on lead AGC to the RF down converter 74 (Fig. 5). The AGC signal is applied to the digital control inputs of step attenuators 330a, 330b and 336 and causes the attenuation they insert into the circuit to be increased. The effect is to decrease the power level of the telephony signal and gain tone transmitted over optical distribution network 18 to HIC 16 including the circuit shown in Fig. 7.

If the gain tone signal level received and analyzed by the HIC 16 circuit in Fig. 7 is correct, no gain control signals are sent to the particular CMI 20 to modify the settings of the step attenuators 330a, 330b and 336. As previously described, CMI 20 reports the settings of its attenuators and other circuits to HIC 16 using control signal oscillator 338.

While what has been described hereinabove is the preferred embodiment of the gain control operation over a broadband distribution network, it can be understood that numerous changes may be made to the gain control circuitry in CMI 20 and HIC 16 by those skilled in the art without departing from the scope of the invention.

## Claims

1. A wireless communication system having a plurality of cells, the system operating over a specified frequency range to provide signal paths in a reverse direction from subscriber units located in the cells towards a central base station transceiver, the system comprising:
a plurality of cable integrators, each receiving radio frequency signals from the subscriber units, and each cable integrator including an optical modulator to translate the received radio frequency to optical reverse transport signals;
an optical fiber for distributing the optical reverse transport signals;
a hub interface converter, for receiving the optical reverse transport signals, the hub interface converter including an optical demodulator for translating the optical reverse transport signals to reverse radio frequency signals and for forwarding the reverse radio frequency signals to the central base station transceivers; and
a plurality of optical splitters, each optical splitter for connecting one of the cable integrators to the optical fiber, the optical splitters having an insertion loss such that the optical reverse transport signals arriving at the hub interface converter from two different cable integrators experience the same optical signal path characteristics.

2. A wireless telephone system as in claim 1 wherein each of the cable integrators additionally include a remote transceiver, additionally comprising:
means in said central base station transceiver for receiving a gain tone that is sent along with said reverse radio frequency signals; and
means in said central base station transceiver responsive to said received gain tone from said ones of said remote transceivers for sending a gain control signal to corresponding ones of said remote transceivers which causes the adjustment of the gain level of signals output from said corresponding ones of said remote transceivers.

3. A wireless telephone system as in claim 2 wherein said means in said central transceiver for receiving said gain tone from ones of said remote transceivers comprises:
means for separating said gain tone from said reverse radio frequency signals received from said ones of said remote transceivers; and
means for analyzing said gain tone received from said remote transceivers to determine if the gain tone signal level is above or below a predetermined level.

4. A wireless telephone system as in claim 3 wherein said means for separating said gain tone from said reverse radio frequency signals received from said remote transceivers comprises filter means.

5. A method for adjusting the gain level of each of a plurality of remote transceivers that carry reverse link radio frequency signals between wireless telephones and a central transceiver, said method comprising the steps of:
upconverting the reverse link radio frequency signals to reverse link optical transport signals;
coupling two or more reverse link optical transport signals to a common optical fiber transport network;
down converting the reverse link optical transport signals to received reverse link radio signals at the central transceiver; and
adjusting the optical insertion path loss associated with each of the reverse link optical transport signals such that the gain levels present at the output of said down converting step are substantially the same.

6. A method as in claim 5 additionally comprising the steps of:
receiving in said central transceiver a gain tone that is sent along with reverse link radio frequency signals transmitted from ones of said remote transceivers; and
returning a control signal from said central transceiver to corresponding ones of each of said remote transceivers which causes the adjustment of the gain level of signals output from said corresponding ones of said remote transceivers.

7. A method as in claim 6 further comprising the steps of:
analyzing the gain tone received at said central transceiver from each of said remote transceivers to determine if its signal level is above or below a predetermined signal level; and
determining the value of said control signal to be returned to said corresponding ones of said remote transceivers which causes the adjustment of the gain level of signals output from said corresponding ones of said remote transceivers.

8. A method as in claim 7 further comprising the step of separating said received reverse link radio frequency signal from said gain tone in said central transceiver before analyzing said gain tone to determine if its signal level is above or below said predetermined signal level.
